(19) Europäisches Patentamt European Patent Office Office européen des brevets

(11) **EP 4 176 696 B1**

(12) **EUROPEAN PATENT SPECIFICATION**

(45) Date of publication and mention
of the grant of the patent:
**01.10.2025 Bulletin 2025/40**

(21) Application number: **21759210.4**

(22) Date of filing: **04.08.2021**

(51) International Patent Classification (IPC):
**H05B 33/14** *(2006.01)*    **H05B 33/22** *(2006.01)*
**H05B 33/28** *(2006.01)*

(52) Cooperative Patent Classification (CPC):
**H05B 33/14; H05B 33/22; H05B 33/28**

(86) International application number:
**PCT/US2021/044446**

(87) International publication number:
**WO 2022/031781 (10.02.2022 Gazette 2022/06)**

(54) **ELECTROLUMINESCENT SYSTEM AND PROCESS**

ELEKTROLUMINESZENTES SYSTEM UND VERFAHREN

SYSTÈME ÉLECTROLUMINESCENT ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2020 US 202063061248 P**

(43) Date of publication of application:
**10.05.2023 Bulletin 2023/19**

(73) Proprietors:
• **Pilkington Group Limited**
**Lancashire L40 5UF (GB)**
• **Darkside Scientific, Inc.**
**Medina, Ohio 44256 (US)**

(72) Inventors:
• **MCSPORRAN, Neil**
**Liverpool Merseyside L19 9BR (GB)**
• **WEIDNER, Stephen Emil**
**Maumee, OH 43537 (US)**
• **MCKITTRICK, Timothy Ian**
**Merseyside PR8 2NJ (GB)**
• **MASTRIAN, Shawn**
**Austin, TX 78717 (US)**
• **GALAYDA, Stephen**
**Lodi, OH 44254 (US)**

(74) Representative: **Stevens Hewlett & Perkins**
**First Floor**
**St Bartholomew's House**
**Lewins Mead**
**Bristol BS1 2NH (GB)**

(56) References cited:
WO-A2-2008/008167    US-A1- 2005 062 411
US-A1- 2012 127 578    US-A1- 2019 134 952
US-B1- 6 551 726

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The subject matter of the embodiments described herein relates generally to an electroluminescent system and process and, more particularly, to an electroluminescent system and process including a doped metal oxide layer to enhance conductivity and durability thereof.

BACKGROUND

Conventional electroluminescent (EL) technology utilizes a parallel-plate capacitor including a phosphor layer. The capacitor dissipates energy by emitting light rather than heat like other lighting and electronic sources. An electric current (e.g. an alternating current) is applied to both parallel plates of the capacitor to allow a buildup of energy between the plates inside the phosphor layer. When the energy is released, it excites the phosphor particles, known as photons, throughout each half cycle of the electric current to emit the light. US 2005/062411 A1 discloses an electroluminescent (EL) system and a method for its production, comprising a multilayered, light-emitting, ceramic device, comprising semiconductive ceramic layers having controlled electrical conductivity and ionic diffusion; light-emitting regions which are integrated composite of two sequentially created layers consisting of ceramic insulation and electroluminescent layers; and a multilayered top barrier cover composed of optically transmissive, non-combustible, ceramic insulation layers.

The EL technology can be used in various coating systems and processes. One type of coating system and process employs several layers of material including a phosphor layer. These separate layers must all work together to allow the electric current to flow between the layers to excite the photons of the phosphor layer. The application of each of the layers during the coating process is highly complex, as each layer must be strategically applied with a proper amount of material and pressure per square inch. Malfunction of the entire system may occur if one of the layers is improperly applied.

Accordingly, it would be desirable to produce an electroluminescent system and process which enhances conductivity and long-term durability while minimizing a complexity thereof.

SUMMARY

In concordance and agreement with the present disclosure, an electroluminescent system and process which enhances conductivity and long-term durability while minimizing a complexity thereof, has surprisingly been discovered.

In one embodiment, an electroluminescent (EL) system, comprises: a glass substrate; an electrically conductive coating disposed on the glass substrate, the electrically conductive coating including a first electrically conductive layer formed of a doped metal oxide; and a electroluminescent coating disposed on the electrically conductive coating, wherein the electroluminescent coating includes a second electrically conductive layer and an electroluminescent layer disposed between the first and second electrically conductive layers, and wherein the electroluminescent layer is configured to emit light when an electrical current is supplied to the first and second electrically conductive layers.

In another embodiment, a method of producing an electroluminescent (EL) system, comprises: providing a glass substrate; forming an electrically conductive coating adjacent the glass substrate, wherein the electrically conductive coating includes a first electrically conductive layer formed of a doped metal oxide; and forming an a electroluminescent coating adjacent the electrically conductive coating, wherein the electroluminescent coating includes a second electrically conductive layer and an electroluminescent layer disposed between the first and second electrically conductive layers, and wherein the electroluminescent layer is configured to emit light when an electrical current is supplied to the first and second electrically conductive layers.

BRIEF DESCRIPTION OF THE DRAWINGS

The above, as well as other objects and advantages of the subject matter of the embodiments described herein, will become readily apparent to those skilled in the art from a reading of the following detailed description of the embodiments when considered in the light of the accompanying drawings in which:

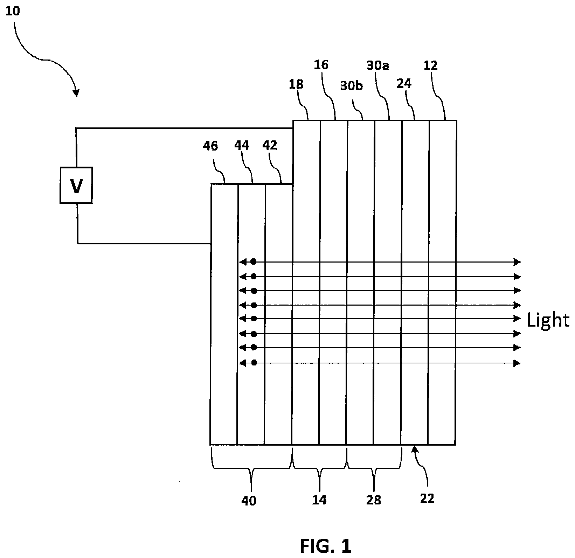

FIG. 1 is a schematic diagram of an electroluminescent system according to an embodiment of the presently disclosed subject matter, the electroluminescent system including a glass substrate having an electrically conductive coating with an electrically conductive layer formed of a doped metal oxide;

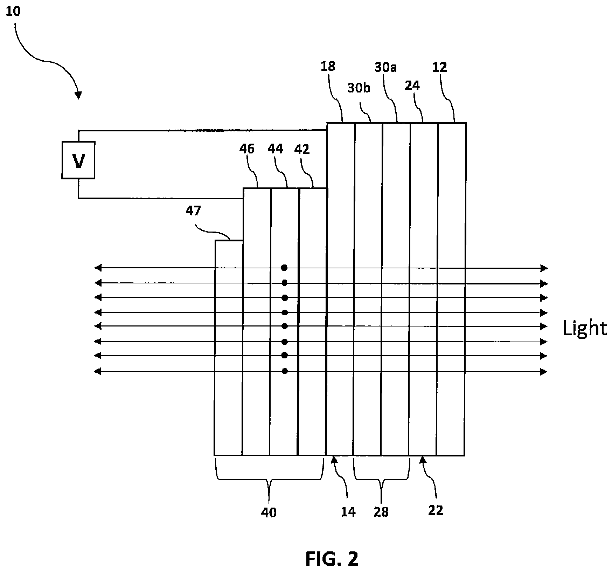

FIG. 2 is a schematic diagram of an electroluminescent system according to another embodiment of the presently disclosed subject matter, the electroluminescent system including a glass substrate having an electrically conductive coating and an electroluminescent coating with a dielectric layer, an electroluminescent layer, an electrically conductive layer, and a protective layer;

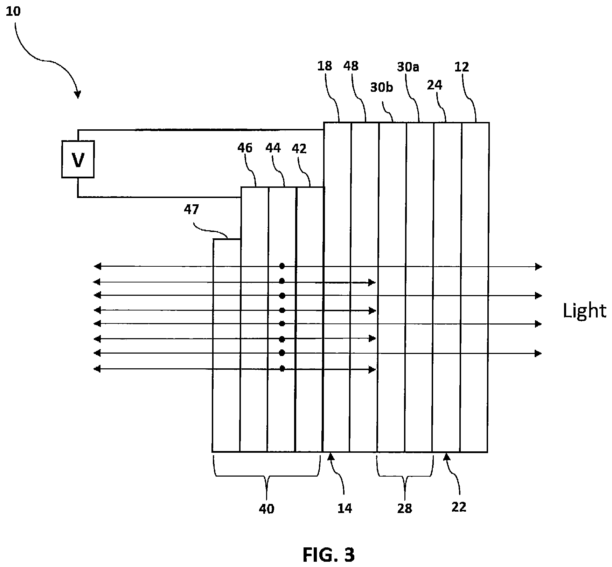

FIG. 3 is a schematic diagram of an electroluminescent system according to another embodiment of the presently disclosed subject matter, the electroluminescent system including a glass substrate having an electrically conductive coating, an electroluminescent coating, and an absorption layer disposed between the glass substrate and the electroluminescent coating;

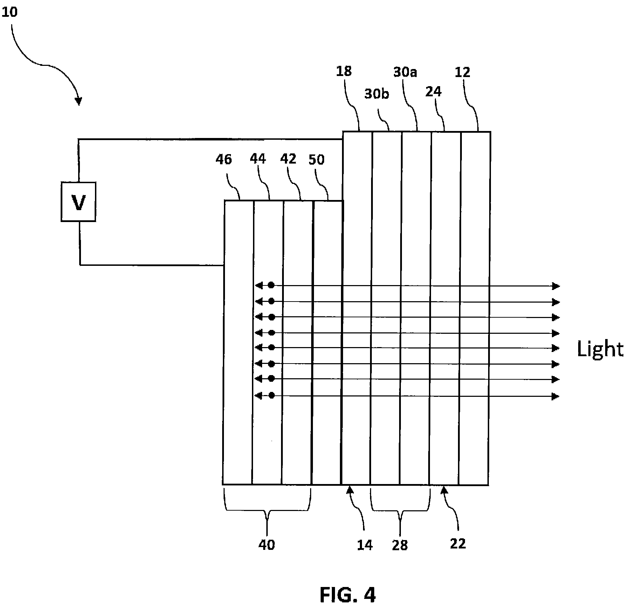

FIG. 4 is a schematic diagram of an electroluminescent system according to another embodiment of the presently disclosed subject matter, the electroluminescent system including a glass substrate having an electrically conductive coating, an electroluminescent coating, and a high-resistance layer disposed between the glass substrate and the electroluminescent coating;

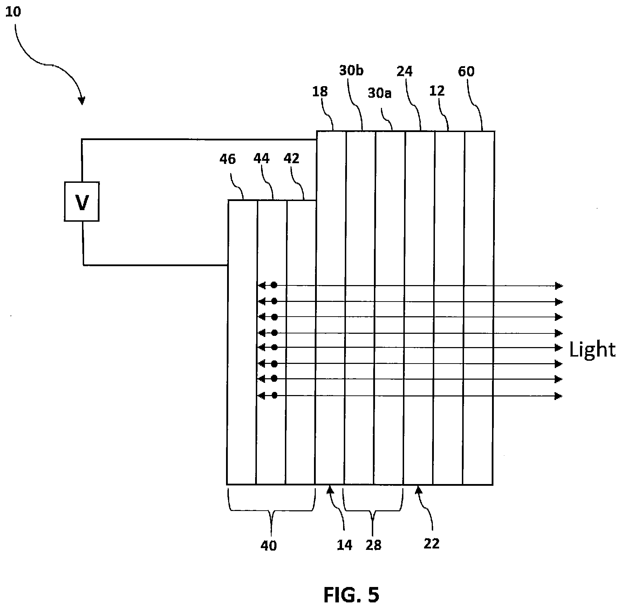

FIG. 5 is a schematic diagram of an electroluminescent system according to another embodiment of the presently disclosed subject matter, the electroluminescent system including a glass substrate having an antireflective feature disposed thereon; and

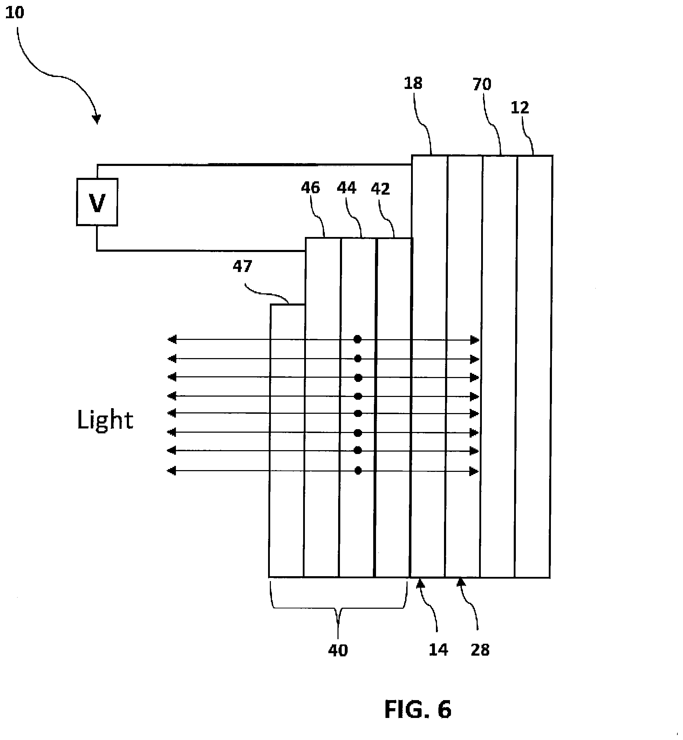

FIG. 6 is a schematic diagram of an electroluminescent system according to yet another embodiment of the presently disclosed subject matter, the electroluminescent system including a glass substrate having an electrically conductive coating, an electroluminescent coating, and a reflective element disposed thereon.

DETAILED DESCRIPTION

The following detailed description and appended drawings describe and illustrate various exemplary embodiments. The description and drawings serve to enable one skilled in the art to make and use the embodiments. The invention is defined in the appended claims.

FIG. 1 depicts a multi-layer electroluminescent (EL) system 10. In certain embodiments, the EL system 10 includes a glass substrate 12. The glass substrate 12 may be of any glass composition and produced through the use of any glass manufacturing process. In certain embodiments, the glass substrate 12 may be substantially clear and transparent to visible light. Preferably, the glass substrate 12 is a soda-lime-silica glass. It is understood, however, the glass substrate 12 may be of another composition such as a borosilicate composition, for example. Also, the transparency or absorption characteristics of the glass substrate 12 may vary between embodiments of the EL system 10. For example, a tinted glass substrate 12 may be utilized in the EL system 10. Additionally, a thickness of the glass substrate 12 may vary between embodiments of the EL system 10. In certain embodiments, the thickness of the glass substrate 12 is in a range of about 0.7 mm to about 12 mm.

An electrically conductive coating 14 is deposited on the glass substrate 12. The electrically conductive coating 14 may include one or more electrically conductive layers. In one embodiment, the electrically conductive coating 14 includes a base layer 16 and electrically conductive layer 18. The base layer 16 may comprise a substantially undoped metal oxide and the electrically conductive layer 18 may comprise a doped metal oxide. It is understood that the base layer 16 is optional and may be omitted from the EL system 10 if desired. Employing the doped metal oxide as the electrically conductive layer 18 of the electrically conductive coating 14 enhances a durability of the EL system 10. More particularly, the EL system 10 is less susceptible to abrasion, damage, temperature, environmental conditions, chemicals, etc. In certain embodiments, the use of the doped metal oxide as the electrically conductive layer 18 of the electrically conductive coating 14 allows heat treatment of the glass substrate 12 with the electrically conductive coating 14 already deposited thereon to improve safety characteristics without changing other properties thereof prior to painting.

It should be appreciated that "substantially undoped" means no atoms of potential dopant materials have been intentionally introduced into a material. Preferably, a source metal from which an oxide of substantially undoped and doped metal oxide are derived is chosen from a group comprising of tin, indium, zinc, cadmium, tungsten, titanium and vanadium. Any conventional dopant which provides a desired conductivity is suitable. Where the source metal is indium, a tin dopant is preferred and where the source metal is tin, a fluorine dopant is preferred. The fluorine-containing compound utilized as a dopant is preferably a result of a decomposition of hydrofluoric acid but can be any suitable fluorine compound such as trifluoroacetic acid and 1,1,1 difluoroethane.

In an embodiment, the base layer 16 comprises undoped tin oxide ($SnO_2$). The base layer 16 is deposited over the glass substrate 12. It is preferred that the base layer 16 is deposited at a thickness of about 15 nm or more. Preferably, the base layer 16 is deposited at a thickness in a range of about 15 nm to about 35 nm. More preferably, the base layer 16 is deposited at a thickness in a range of about 20 nm to about 25 nm. Most preferably, the doped metal oxide used for the electrically conductive layer 18 is a transparent doped metal oxide such as such as fluorine doped tin oxide ($SnO_2$:F), for example. It is understood that the electrically conductive layer 18 may be deposited over and directly on the base layer 16. In certain embodiments, the electrically conductive layer 18 is deposited on the base layer 16 at a thickness of about 200 nm or more. Preferably, the electrically conductive layer 18 is deposited at a thickness in a range of about 200 nm to about 600 nm. More preferably, the thickness of the electrically conductive layer 18 is in a range of about 300 nm to about 400 nm.

Due to the presence of a fluorine dopant, the electrically conductive layer 18 is electrically conductive and imparts the glass substrate 12 with a reduced sheet resistance when compared with the base layer 16 of undoped tin oxide ($SnO_2$) of the same thickness. The sheet resistance (Rsh) of the electrically conductive coating 14 is a function of an electron mobility of the electrically conductive layer 18. The sheet resistance is a function of electron mobility according to the relationship:

$$Rsh = (1/q{*}t{*}N¬c{*}\ \mu)$$

where μ is the electron mobility, N¬c is the carrier concentration, q is electron charge (1.6E-19) and t is the thickness of the electrically conductive layer 18. Preferably, the electrically conductive coating 14 has a sheet resistance in a range of about 5 ohm/square or more. Preferably, the electrically conductive coating 14 has a sheet resistance in a range of about 5 ohm/square to about 250 ohm/square. More preferably, the electrically conductive coating 14 has a sheet resistance in a range of about 6 ohm/square to about 20 ohm/square. Such sheet resistance of the electrically conductive coating 14 enhances a performance of and permits an increase in size of the EL system 10.

In certain embodiments, the EL system 10 further includes a barrier coating 22 deposited on the glass substrate 12 prior to the electrically conductive coating 14. The barrier coating 22 acts to inhibit a migration of alkaline ions from the glass substrate 12 into the electrically conductive coating 14. Any migration of such alkaline ions from the glass substrate 12 would be detrimental to a formation and efficiency of the electrically conductive coating 14. As such, the barrier coating 22 acts to reduce the haze of the glass substrate 12. In certain embodiments, the barrier coating 22 may include one or more insulator layers and one or more of the insulator layers may be pyrolytic. In one embodiment, the barrier coating 22 includes an insulator layer 24, which preferably comprises a non-metal oxide or metalloid oxide (e.g. an undoped silicon oxide ($SiO_2$)) deposited at a thickness of about 10 nm or more. Preferably, the thickness of the insulator layer 24 is about 10 nm to about 30 nm. More preferably, the thickness of the insulator layer 24 is about 10 nm to about 20 nm. Even more preferably the thickness of the insulator layer 24 is about 13 nm to about 17 nm. Most preferably the thickness of the insulator layer 24 is about 15 nm. The insulator layer 24 may be deposited by any suitable method such as atmospheric chemical vapor deposition (APCVD), for example. Other known deposition methods are suitable for depositing the insulator layer 24 such as, for example, sol-gel coating techniques or sputter coating techniques. In embodiments where the glass substrate 12 is a float glass ribbon, the barrier coating 14 is preferably applied in a heated zone of a float glass manufacturing process.

In some embodiments, the EL system 10 further includes a color suppression coating 28 provided between the glass substrate 12 or the barrier coating 22 and the electrically conductive coating 14. The color suppression coating 28 is disposed on the glass substrate 12 or the barrier coating 22 prior to the electrically conductive coating 14. The color suppression coating 28 includes at least one color suppression or anti-iridescence interlayer 30 provided between the glass substrate 12 and one of the base layer 16 or the electrically conductive layer 18. The color suppression coating 28 reduces a reflected color or iridescence of the EL system 10 as the thickness of the base layer 16 and the electrically conductive layer 18 increases within the range of about 100 nm to about 1,000 nm. Additionally, the color suppression coating 28 provides consistency of color off-angle.

In certain embodiments, the color suppression coating 28 is of a two-layer system. In other embodiments (not depicted), the color suppression coating 28 may be provided as a single coating layer. Suitable color suppression interlayers 30 are described in U.S. Patent Nos. 4,308,316, 4,612,217, and 4,419,386.

In the embodiment where the color suppression coating 28 is a two-layer system, which is illustrated in FIG. 1, the EL system 10 comprises a first color suppression or anti-iridescence interlayer 30a that is deposited over and, preferably, directly on the barrier coating 22 and a second color suppression or anti-iridescence interlayer 30b deposited over and, preferably, directly on the first color suppression or anti-iridescence interlayer 30a.

In some embodiments, the first color suppression or anti-iridescence interlayer 30a is formed of an inorganic metal oxide or inorganic metalloid oxide, preferably an inorganic metal oxide. Preferably, in these embodiments, the first color suppression or anti-iridescence interlayer 30a comprises undoped tin oxide ($SnO_2$) deposited at a thickness of about 10 nm to about 40 nm. Preferably, the thickness of the first color suppression or anti-iridescence interlayer 30a is about 15 nm to about 35 nm. More preferably, the thickness of the first color suppression or anti-iridescence interlayer 30a is about 20 nm to about 30 nm. Most preferably, the thickness of the first color suppression or anti-iridescence interlayer 30a is about 25 nm.

The second color suppression or anti-iridescence interlayer 30b may be formed of an inorganic metal oxide or inorganic metalloid oxide, preferably an inorganic metalloid oxide. Preferably, in these embodiments, the second color suppression or anti-iridescence interlayer 30b comprises silicon dioxide ($SiO_2$) deposited at a thickness of about 10 nm to about 40 nm. Preferably, the thickness of the second color suppression or anti-iridescence interlayer 30b is about 15 nm to about 35 nm. More preferably, the thickness of the second color suppression or anti-iridescence interlayer 30b is about 20 nm to about 30 nm. Most preferably, the thickness of the first color suppression or anti-iridescence interlayer 30a is about 25 nm.

After coating the glass substrate 12 with at least one of the barrier coating 22, the color suppression coating 28, and the electrically conductive coating 14, the coated glass substrate 12 is cooled to an ambient temperature in an annealing lehr. After cooling the coated glass substrate 12, a strengthening process is performed on the coated glass substrate 12. In one embodiment, the coated glass substrate 12 is delivered to a strengthening apparatus so that the coated glass substrate 12 can be strengthened. It should be noted that the term strengthened and modifications thereof are used herein to refer to heat strengthened, tempered, toughened and other conditions known in the art where the coated glass substrate 12 exhibits a surface compressive stress of 3,500 pounds per square inch (psi) or more.

In certain embodiments, the coated glass substrate 12 may be processed prior or subsequent to the strengthening apparatus to produce a desired visual effect (e.g. a patterned effect) of the EL system 10. As a non-limiting example, a laser ablation method is utilized to remove one or more layers of at least one of the barrier coating 22, the color suppression coating 28, and the electrically conductive coating 14 in specific areas of the EL system 10 to produce the desired visual effect. Various other methods may be employed to produce the desired visual effect.

As illustrated in FIG. 1, the EL system 10 further includes an EL coating 40. The EL coating 40 may be a three-layer system including a dielectric layer 42, an EL layer 44, and an electrically conductive layer 46. In other embodiments, shown in FIG. 2, the EL coating 40 may further include additional protective layers 47. It is understood that the EL coating 40 may comprise as many or as few of layers as desired. In an embodiment, the EL coating 40 may be as described in U.S. Patent No. 9,642,212. Preferably, the EL coating 40 is liquid material applied onto a conductive glass surface such as the coated glass substrate 12 as described hereinabove, for example. It should be understood, however, that the EL coating 40 may be applied to various other substrates as desired. The EL coating 40 may be applied to the coated glass substrate 12 in a series of layers, with each layer performing a specific function.

In the various embodiments described herein, the EL coating 40 may be a liquid-applied (via spray, print, inkjet print, pad print, or other liquid application) conformal EL coating. In one embodiment, the EL coating 40 is applied by high pressure low volume spray techniques, where each of the layers 42, 44, 46 is atomized by compressed air and deposited on the coated glass substrate 12 in this manner, and the layers 42, 44, 46 then flow after deposition to a proper film thickness.

In another embodiment, the EL coating 40 is applied by aerosol spray techniques, where each of the layers 42, 44, 46 is atomized by a propellant inside the can, typically propane, and deposited on the coated glass substrate 12 in this manner, and the layers 42, 44, 46 then flow after deposition to a proper film thickness.

In yet another embodiment, the EL coating 40 is applied by electrostatic spray techniques, where each of the layers 42, 44, 46 is atomized by compressed air and deposited on the charged surface of the coated glass substrate 12 in this manner, and the layers 42, 44, 46 then flow after deposition to the proper film thickness.

In one embodiment, the liquid-applied conformal coating is applied by printing techniques, where each of the layers 42, 44, 46 is deposited as a film by means of a screen print, a pad print, an ink-jet print, or other method in which the film is liquid-applied by printed techniques.

The layers 42, 44, 46 applied to the conductive coated glass substrate 12, or between multiple conductive coated glass substrates 12, form the EL system 10. The dielectric layer 42 is applied to the coated glass substrate 12 to insulate the electrically conductive layer 46 of the EL coating 40 from the electrically conductive layer 18 of the electrically conductive coating 14. It is understood that the dielectric layer 42 may be applied in a manner that a smooth film forms which completely covers the coated glass substrate 12 so as not to allow a direct electrical connection between the electrically conductive layers 18, 46.

In certain embodiment, the dielectric layer 42 comprises 45-80% by weight of said reducer solvent component, typically 60%-65%, with the reducer solvent being typically either 50-70% n-butyl acetate and 30-50% xylene or 50-70% methyl acetate and 30-50% xylene; 10-35% by weight of said binder component, typically 15-20%, and preferably an acrylic or polyurethane binder; 20-50% by weight of a high-dielectric pigment component, typically 35%-45%, with said high-dielectric pigment component including any one or more of barium titanate, strontium titanate, titanium dioxide, lead zirconate titanate, tantalum oxide, aluminum oxide, or other high-dielectric solids. The dielectric layer 42 may have a thickness in the range of about 0.0005" to about 0.002", preferably about 0.001".

The EL layer 44 is interposed between the dielectric layer 42 and the electrically conductive layer 46. The EL layer 44 may applied onto the dielectric layer 42 in a manner which completely covers the dielectric layer 42 and, preferably, where electroluminescent pigment is dispersed in an even and uniform layer as a film forms to provide a uniform lighting effect when energized. The EL layer 44 is configured to emit light when an electrical current (e.g. an alternating electrical current) is supplied to the electrically conductive layers 18, 46. Preferably, the EL layer 44 may be formed from a phosphor material having photons that emit the light throughout each half cycle of the electric current. It is understood that the electrical current may be supplied to the EL system 10 by any suitable method and power source as desired.

In certain embodiments, the EL layer 44 comprises 40-80% by weight of said reducer solvent component, typically 60%-65%, with the reducer solvent being typically either 50-70% n-butyl acetate and 30-50% xylene or 50-70% methyl acetate and 30-50% xylene; 10-35% by weight of said binder component, typically 15-20%, and preferably an acrylic or polyurethane binder; 20-50% by weight of an electroluminescent pigment component, typically 35%-45%, with said electroluminescent pigment component including any one or more of metal-doped zinc sulfide phosphors, metal-doped zinc selenide phosphors, metal-doped or native crystalline oxides such as $Ga_2O_3$, $ZnGa_2O_4$, $CaGa_2O_4$, $Zn_2SiO_7$, $Zn_2SiO_4$, $Y_2SlO_5$, and oxide phosphors of Sr, Ga, Ba, and Eu in some combination, or other electroluminescent phosphors. The electroluminescent pigment layer has a thickness in the range of about 0.001" to about 0.003", preferably about 0.002".

In other certain embodiments, the dielectric layer 42 and the EL layer 44 may be combined into a single liquid for application in a single layer simultaneously. The combined dielectric and EL layer comprises 40-80% by weight of said reducer solvent component, typically 60%-65%, with the reducer solvent being typically either 50-70% n-butyl acetate and 30-50% xylene or 50-70% methyl acetate and 30-50% xylene; 10-35% by weight of said binder component, typically 15-20%, and preferably an acrylic or polyurethane binder; 20-50% by weight of an electroluminescent pigment component, typically 25%-55%, with said electroluminescent pigment component including any one or more of metal-doped zinc sulfide phosphors, metal-doped zinc selenide phosphors, metal-doped or native crystalline oxides such as $Ga_2O_3$, $ZnGa_2O_4$, $CaGa_2O_4$, $Zn_2SiO_7$, $Zn_2SiO_4$, $Y_2SiO_5$, and oxide phosphors of Sr, Ga, Ba, and Eu in some combination, or other electroluminescent phosphors; and 0-30% by weight of a high-dielectric pigment component, typically 5%-25%, with said high-dielectric pigment component including any one or more of barium titanate, strontium titanate, titanium dioxide, lead zirconate titanate, tantalum oxide, aluminum oxide, or other high-dielectric solids. The combined dielectric and EL layer has a thickness in the range of about 0.001" to about 0.003", preferably about 0.002".

As illustrated, the electrically conductive layer 46 may be formed onto the EL layer 44. In certain embodiment, the electrically conductive layer 46 may be formed from an inherently conductive material. The electrically conductive layer 46 may be applied in a manner that a smooth film forms which completely covers the EL layer 44 so as not to allow a direct electrical connection between the electrically conductive layers 18, 46.

In certain embodiments, the protective layer 47 may be applied onto the electrically conductive layer 46 in a manner which completely covers the electrically conductive layer 46 to provide protection from wear and damage during use of the EL system 10. Preferably, the EL system 10 includes at least one of the protective layers 47 deposited onto the electrically conductive layer 46 when the EL system 10 is a transparent or semi-transparent article. In certain embodiments, the protective layer 47 is a coating which comprises polyurethane deposited at a thickness of about 40 microns or more. Preferably, the thickness of the protective layer 47 is about 25 microns to about 100 microns. More preferably, the thickness of the protective layer 47 is about 50 microns. It is understood that the protective layer 47 may have any desired thickness. Various other materials and methods may be employed to provide a desired protection against wear and damage to the EL system 10, and more preferably the electrically conductive layer 46.

In an embodiment, the electrically conductive layer 46 is formed from an opaque material. Employing the use of the opaque material produces a non-transparent EL system 10. In another embodiment, however, the electrically conductive layer 46 is formed from a transparent material. The use of the transparent material produces a transparent EL system 10. Such transparent EL system 10 allows and provides for additional aesthetic effects which may not be achieved with the non-transparent EL system 10. It is understood that the electrically conductive layer 46 may be formed from any suitable opaque material, semi-opaque material, semi-transparent, and transparent material, with any suitable degree of transparency, as desired. It is further understood that the electrically conductive layer 46 may be formed from any suitable translucent material, with any suitable degree of translucency, as desired.

In certain embodiments, the electrically conductive layer 46 comprises 2-12% by weight of an inherently conductive polymer component, such as PEDOT:PSS or other inherently conductive polymer, typically 3%-5%; 55%-80% by weight of a reducer solvent component, typically 70%-75%, to assist in the deposition and post-deposition flow of the electrically conductive layer 46, with said reducer solvent being functionally compatible with the chosen binder system and, potentially, the inherently conductive polymer, and the reducer component including any one or more of toluene, xylene, acetone, naphtha, mineral spirits, methyl ethyl ketone, acetone, water, ethanol, isopropyl alcohol, n-butyl alcohol, methanol, ethyl benzene, cumene, Solane, n-propyl acetate, methyl acetate, methyl cyclohexane, p-Trifluoromethylphenyl chloride, and p-Chlorobenzotrifluoride, or other volatile solvent, typically in the ratio of 15%-30% by weight ethanol, 15%-25% by weight methyl acetate, 15%-25% by weight p-Chlorobenzotrifluoride, and 15%-25% by weight water; and 10%-30% by weight of a film-forming binder component, preferably 10%-15%, which is compatible with the inherently conductive polymer and forms a film that flows evenly and consistently when atomized onto the surface of an object, with said binder component including any one or more of an acrylic, polyurethane, vinyl, latex, cellulose acetate butyrate or other binder, preferably a polyurethane or acrylic. The electrically conductive layer 46 may have a thickness in the range of about 0.0002" to about 0.0006", preferably about 0.0005", and a resistivity of less than 2000 ohm/square meter.

In some embodiments, shown in FIG. 3, the semi-transparent EL system 10 may further include an absorption layer 48 interposed between the glass substrate 12 and the electrically conductive coating 14, and more preferably between the color suppression coating 28 and the electrically conductive layer 18. As illustrated, the absorption layer 48 reduces an amount of light emitted from the EL system 10 in a first direction through the glass substrate 12 as compared to an amount of light emitted from the EL system 10 in an opposite second direction through the EL coating 40. The absorption layer 48 may be formed of a doped metal oxide. Preferably, the absorption layer 48 comprises antimony doped tin oxide ($SnO_2$:Sb) deposited at a thickness of about 140 nm or more. Preferably, the thickness of the absorption layer 48 is about 140 nm to about 200 nm. More preferably, the thickness of the absorption layer 48 is about 160 nm. It is understood that any suitable doped metal oxide may be employed for the absorption layer 48 as desired. The absorption layer 48 may be deposited at any desired thickness. In certain instances, the absorption layer 48 allows and provides for additional aesthetic effects of the EL system 10.

In certain embodiments, shown in FIG. 4, the EL system 10 may further include a high-resistance (HR) layer 50 interposed between the electrically conductive coating 14 and the EL coating 40. The HR layer 50 may be formed of an inorganic metal oxide. Preferably, in these embodiments, the HR layer 50 comprises titanium dioxide ($TiO_2$) deposited at a thickness of about 15 nm or more. Preferably, the thickness of the HR layer 50 is about 15 nm to about 50 nm. More preferably, the thickness of the HR layer 50 is about 15 nm to about 40 nm. Even more preferably, the thickness of the HR layer 50 is about 15 nm to about 25 nm. Most preferably, the thickness of the HR layer 50 is about 20 nm. It is understood that various other inorganic metal oxides may be employed for the HR layer 50 as desired such as tantalum oxide (TaOx). The HR layer 50 may be deposited at any desired thickness. In some embodiments, the HR layer 50 enhances performance and is employed in place of the dielectric layer 42 of the EL coating 40 to militate against a direct electrical connection between the electrically conductive layers 18, 46 and provide protection against an electrical short in the EL system 10. It should be appreciated that the HR layer 50 may be employed with any transparent, semi-transparent, semi-opaque, and opaque EL system 10, if desired.

In other embodiments, shown in FIG. 5, the EL system 10 may further include an antireflective (AR) element 60. Preferably, the AR element 60 is formed on the coated glass substrate 12 opposite the electrically conductive coating 14, the barrier coating 22, and the EL coating 40. As non-limiting examples, the AR element 60 may be an additional coating deposited on the coated glass substrate 12 or an additional glass sheet having an antireflective film (e.g. polyvinyl butyral film) disposed thereon.

In one embodiment, the AR element 60 is a single layer coating which comprises magnesium fluoride ($MgF_2$) deposited by physical vapor deposition (PVD). In another embodiment, the AR element 60 is a single layer coating which comprises silicon oxide ($SiO_2$) nanoparticles deposited by a sol-gel process.

In certain other embodiments, the AR element 60 is a multi-layer coating which comprises a first tin oxide ($SnO_2$) layer, a first silicon oxide ($SiO_2$) layer, a second tin oxide ($SnO_2$) layer, and a second silicon oxide ($SiO_2$) layer. More particularly, the first tin oxide layer is deposited on the glass substrate 12. The first silicon oxide layer is then deposited on the first tin oxide layer. Thereafter, the second tin oxide layer is deposited on the first silicon oxide layer and the second silicon oxide layer is deposited on the second tin oxide layer. Preferably, the first tin oxide layer is deposited at a thickness of 5 to 20 nm, more preferably 10 to 15 nm, most preferably about 12 nm. Preferably, the first silicon oxide layer is deposited at a thickness of 10 to 40 nm, more preferably 20 to 30 nm, most preferably about 25 nm. Preferably, the second tin oxide layer is deposited at a thickness of 90 to 160 nm, more preferably 110 to 140 nm, most preferably about 130 nm. Preferably, the second silicon oxide layer is deposited at a thickness of 60 to 120 nm, more preferably 80 to 100 nm, most preferably about 90 nm. Preferably, the first tin oxide layer is deposited at a thickness of about 12 nm, the first silicon oxide layer is deposited at a thickness of about 25 nm, the second tin oxide layer is deposited at a thickness of about 130 nm, and the second silicon oxide layer is deposited at a thickness of about 90 nm.

In yet another embodiment, the AR element 60 is a multi-layer coating which comprises a first tin oxide ($SnO_2$) layer, a titanium dioxide ($TiO_2$) layer, and a second tin oxide ($SnO_2$) layer. More particularly, the first tin oxide layer is deposited on the glass substrate 12. The titanium dioxide layer is then deposited on the first tin oxide layer and the second tin oxide layer is deposited on the titanium dioxide layer. Preferably, the first tin oxide layer is deposited at a thickness of 5 to 25 nm, more preferably 10 to 20 nm, most preferably about 15 nm. Preferably, the titanium dioxide layer is deposited at a thickness of 5 to 20 nm, more preferably 10 to 15 nm, most preferably about 12 nm. Preferably, the second tin oxide layer is deposited at a thickness of 70 to 130 nm, more preferably 90 to 110 nm, most preferably about 100 nm. Preferably, the first tin oxide layer is deposited at a thickness of about 15 nm, the titanium dioxide layer is deposited at a thickness of about 12 nm, and the second tin oxide layer is deposited at a thickness of about 100 nm.

It is understood that each layer of each embodiment of the AR element 60 may have any desired thickness. It is further understood that the AR element 60 may comprise as many or as few of layers as desired. Various other materials and methods may be employed to produce the EL system 10 with antireflective properties.

In other embodiments, shown in FIG. 6, the EL system 10 may further include a reflective element 70. Preferably, the reflective element 70 is formed by a pyrolytic reflective coating. The reflective element 70 allows the EL system 10, when not in operation, to appear as a mirrored surface or object. Preferably, the reflective element 70 is formed between the glass substrate 12 and the electrically conductive coating 14. In certain embodiments, the reflective element 70 is a coating which comprises undoped silicon (Si) deposited at a thickness of about 20 nm or more. Preferably, the thickness of the reflective element 70 is about 20 nm to about 40 nm, more preferably 20 nm to about 30 nm. More preferably, the thickness of the reflective element 70 is about 25 nm. It is understood that the reflective element 70 may have any desired thickness. In some embodiments employing the reflective element 70, the color suppression coating 28 of silicon dioxide ($SiO_2$) may have a desired thickness of 50 to 110 nm, preferably 70 to 90 nm, more preferably about 80 nm, and the electrically conductive coating 14 including the electrically conductive layer 18 of fluorine doped tin oxide ($SnO_2$:F) may have a desired thickness of 200 to 300 nm, preferably 225 to 275 nm, more preferably 245 to 265 nm, most preferably about 256 nm. Various other materials and methods may be employed to produce the EL system 10 with reflective properties.

Referring now to FIG. 1, the EL system 10 shown according to one embodiment of the presently disclosed subject matter is a non-transparent article configured to emit light from the EL system 10 in the first direction through the glass substrate 12. The EL system 10 includes the glass substrate 12 having the barrier coating 22, comprised of an insulator layer 24 of undoped silicon oxide ($SiO_2$), deposited thereon. The color suppression coating 28 is deposited onto the barrier coating 22. More particularly, the first color suppression or anti-iridescence interlayer 30a of undoped tin oxide ($SnO_2$) is deposited onto the insulator layer 24 of the barrier coating 22 and the second color suppression or anti-iridescence interlayer 30b of the color suppression coating 28 of silicon dioxide ($SiO_2$) is deposited onto the first color suppression or anti-iridescence interlayer 30a. The electrically conductive coating 14 including the electrically conductive layer 18 of fluorine doped tin oxide ($SnO_2$:F) is deposited onto the second color suppression or anti-iridescence interlayer 30b. The EL coating 40 is then deposited over the electrically conductive coating 14. More particularly, the dielectric layer 42 is deposited onto the electrically conductive layer 18 of the electrically conductive coating 14 and the EL layer 44 is deposited onto the dielectric layer 42. The electrically conductive layer 46, comprising the nontransparent material, is deposited onto the EL layer 44. Both of the electrically conductive layers 18, 46 are in electrical communication with the power source.

When the power source provides electrical current to the electrically conductive layers 18, 46 of the EL system 10, the EL layer 44 of the EL coating 40 emits light in the first direction through the dielectric layer 42, the electrically conductive layer 18, the color suppression layer 28, the barrier coating 22, and the glass substrate 12. The nontransparent electrically conductive layer 46 absorbs, scatters, or reflects the light emitted from the EL layer 44 and, therefore, militates against the light emitted from the EL layer 44 of the EL coating 40 to be transmitted in the second direction.

FIG. 2 illustrates the EL system 10 according to a second embodiment of the presently disclosed subject matter and is a transparent article configured to emit light from the EL system 10 in both the first direction through the glass substrate 12 and the opposite second direction through the EL coating 40. The EL system 10 includes the glass substrate 12 having the barrier coating 22, comprised of an insulator layer 24 of undoped silicon oxide ($SiO_2$), deposited thereon. The color suppression coating 28 is deposited onto the barrier coating 22. More particularly, the first color suppression or anti-iridescence interlayer 30a of undoped tin oxide ($SnO_2$) is deposited onto the insulator layer 24 of the barrier coating 22 and the second color suppression or anti-iridescence interlayer 30b of the color suppression coating 28 of silicon dioxide ($SiO_2$) is deposited onto the first color suppression or anti-iridescence interlayer 30a. The electrically conductive coating 14 including the electrically conductive layer 18 of fluorine doped tin oxide ($SnO_2$:F) is deposited onto the second color suppression or anti-iridescence interlayer 30b. The EL coating 40 is then deposited over the electrically conductive coating 14. More particularly, the dielectric layer 42 is deposited onto the electrically conductive layer 18 of the electrically conductive coating 14 and the EL layer 44 is deposited onto the dielectric layer 42. The electrically conductive layer 46, comprising the transparent material, is deposited onto the EL layer 44. Both of the electrically conductive layers 18, 46 are in electrical communication with the power source. The protective layer 47 is then deposited on the electrically conductive layer 46 of the EL coating 40 to complete the EL system 10.

When the power source provides electrical current to the electrically conductive layers 18, 46 of the EL system 10, the EL layer 44 of the EL coating 40 emits light in both the first direction through the dielectric layer 42, the electrically conductive layer 18, the color suppression layer 28, the barrier coating 22, and the glass substrate 12 and the second direction through the transparent electrically conductive layer 46 and the protective layer 47.

A third embodiment of the presently disclosed subject matter is shown in FIG. 3 and is a semi-transparent article configured to emit a reduced amount of light from the EL system 10 in the first direction through the glass substrate 12 as compared to the amount of light emitted from the EL system 10 in the opposite second direction through the EL coating 40. The EL system 10 includes the glass substrate 12 having the barrier coating 22, comprised of an insulator layer 24 of undoped silicon oxide ($SiO_2$), deposited thereon. The color suppression coating 28 is deposited onto the barrier coating 22. More particularly, the first color suppression or anti-iridescence interlayer 30a of undoped tin oxide ($SnO_2$) is deposited onto the insulator layer 24 of the barrier coating 22 and the second color suppression or anti-iridescence interlayer 30b of the color suppression coating 28 of silicon dioxide ($SiO_2$) is deposited onto the first color suppression or anti-iridescence interlayer 30a. The absorption layer 48 of antimony doped tin oxide ($SnO_2$:Sb) is deposited onto the second color suppression or anti-iridescence interlayer 30b. Thereafter, the electrically conductive coating 14 including the electrically conductive layer 18 of fluorine doped tin oxide ($SnO_2$:F) is deposited onto the absorption layer 48. The EL coating 40 is then deposited over the electrically conductive coating 14. More particularly, the dielectric layer 42 is deposited onto the electrically conductive layer 18 of the electrically conductive coating 14 and the EL layer 44 is deposited onto the dielectric layer 42. The electrically conductive layer 46, comprising the transparent material, is deposited onto the EL layer 44. Both of the electrically conductive layers 18, 46 are in electrical communication with the power source. The protective layer 47 is then deposited on the electrically conductive layer 46 of the EL coating 40 to complete the EL system 10.

When the power source provides electrical current to the electrically conductive layers 18, 46 of the EL system 10, the EL layer 44 of the EL coating 40 emits light in both the first direction and the second direction. As illustrated, a portion of the light emitted from the EL layer 44 in the first direction, and transmitted through the dielectric layer 42 and the electrically conductive layer 18, is absorbed by the absorption layer 48 and a remaining portion of the light emitted in the first direction, which is not absorbed by the absorption layer 48, is transmitted through the absorption layer 48, the color suppression layer 28, the barrier coating 22, and the glass substrate 12. The light emitted from the EL layer 44 in the second direction is transmitted through the transparent electrically conductive layer 46 and the protective layer 47.

A fourth embodiment of the presently disclosed subject matter is a semi-transparent article configured to emit a reduced amount of light from the EL system 10 in the first direction through the glass substrate 12 as compared to the amount of light emitted from the EL system 10 in the opposite second direction through the EL coating 40. The EL system 10 includes the glass substrate 12 having the barrier coating 22, comprised of an insulator layer 24 of undoped silicon oxide ($SiO_2$), deposited thereon. The color suppression coating 28 is deposited onto the barrier coating 22. More particularly, the first color suppression or anti-iridescence interlayer 30a of undoped tin oxide ($SnO_2$) is deposited onto the insulator layer 24 of the barrier coating 22 and the second color suppression or anti-iridescence interlayer 30b of the color suppression coating 28 of silicon dioxide ($SiO_2$) is deposited onto the first color suppression or anti-iridescence interlayer 30a. The absorption layer 48 of antimony doped tin oxide ($SnO_2$:Sb) is deposited onto the second color suppression or anti-iridescence interlayer 30b. Thereafter, the electrically conductive coating 14 including the electrically conductive layer 18 of fluorine doped tin oxide ($SnO_2$:F) is deposited onto the absorption layer 48. The HR layer 50 of titanium dioxide ($TiO_2$) or tantalum oxide (TaOx) is deposited onto the electrically conductive layer 18 of the electrically conductive coating 14. The EL coating 40 is then deposited over the HR layer 50. More particularly, the dielectric layer 42 is deposited onto the HR layer 50 and the EL layer 44 is deposited onto the dielectric layer 42. The electrically conductive layer 46, comprising the transparent material, is deposited onto the EL layer 44. Both of the electrically conductive layers 18, 46 are in electrical communication with the power source. The protective layer 47 is then deposited on the electrically conductive layer 46 of the EL coating 40 to complete the EL system 10.

When the power source provides electrical current to the electrically conductive layers 18, 46 of the EL system 10, the EL layer 44 of the EL coating 40 emits light in both the first direction and the second direction. As illustrated, a portion of the light emitted from the EL layer 44 in the first direction, and transmitted through the dielectric layer 42, the HR layer 50, and the electrically conductive layer 18, is absorbed by the absorption layer 48 and a remaining portion of the light emitted in the first direction, which is not absorbed by the absorption layer 48, is transmitted through the absorption layer 48, the color suppression layer 28, the barrier coating 22, and the glass substrate 12. The light emitted from the EL layer 44 in the second direction is transmitted through the transparent electrically conductive layer 46 and the protective layer 47.

FIG. 4 illustrates the EL system 10 according to a fifth embodiment of the presently disclosed subject matter and is a non-transparent article configured to emit light from the EL system 10 in the first direction through the glass substrate 12. The EL system 10 includes the glass substrate 12 having the barrier coating 22, comprised of an insulator layer 24 of undoped silicon oxide ($SiO_2$), deposited thereon. The color suppression coating 28 is deposited onto the barrier coating 22. More particularly, the first color suppression or anti-iridescence interlayer 30a of undoped tin oxide ($SnO_2$) is deposited onto the insulator layer 24 of the barrier coating 22 and the second color suppression or anti-iridescence interlayer 30b of the color suppression coating 28 of silicon dioxide ($SiO_2$) is deposited onto the first color suppression or anti-iridescence interlayer 30a. The electrically conductive coating 14 including the electrically conductive layer 18 of fluorine doped tin oxide ($SnO_2$:F) is deposited onto the second color suppression or anti-iridescence interlayer 30b. The HR layer 50 of titanium dioxide ($TiO_2$) or tantalum oxide (TaOx) is deposited onto the electrically conductive layer 18 of the electrically conductive coating 14. The EL coating 40 is then deposited over the HR layer 50. More particularly, the dielectric layer 42 is deposited onto the HR layer 50 and the EL layer 44 is deposited onto the dielectric layer 42. The electrically conductive layer 46, comprised of the non-transparent material, is deposited onto the EL layer 44. Both of the electrically conductive layers 18, 46 are in electrical communication with the power source.

When the power source provides electrical current to the electrically conductive layers 18, 46 of the EL system 10, the EL layer 44 of the EL coating 40 emits light in the first direction through the dielectric layer 42, the HR layer 50, the electrically conductive layer 18, the color suppression layer 28, the barrier coating 22, and the glass substrate 12. The nontransparent electrically conductive layer 46 absorbs, scatters, or reflects the light emitted from the EL layer 44 and, therefore, militates against the light emitted from the EL layer 44 of the EL coating 40 to be transmitted in the second direction.

A sixth embodiment of the presently disclosed subject matter is also a transparent article configured to emit light from the EL system 10 in both the first direction through the glass substrate 12 and the opposite second direction through the EL coating 40. The EL system 10 includes the glass substrate 12 having the barrier coating 22, comprised of an insulator layer 24 of undoped silicon oxide ($SiO_2$), deposited thereon. The color suppression coating 28 is deposited onto the barrier coating 22. More particularly, the first color suppression or anti-iridescence interlayer 30a of undoped tin oxide ($SnO_2$) is deposited onto the insulator layer 24 of the barrier coating 22 and the second color suppression or anti-iridescence interlayer 30b of the color suppression coating 28 of silicon dioxide ($SiO_2$) is deposited onto the first color suppression or anti-iridescence interlayer 30a. The electrically conductive coating 14 including the electrically conductive layer 18 of fluorine doped tin oxide ($SnO_2$:F) is deposited onto the second color suppression or anti-iridescence interlayer 30b. The HR layer 50 of titanium dioxide ($TiO_2$) or tantalum oxide (TaOx) is deposited onto the electrically conductive layer 18 of the electrically conductive coating 14. The EL coating 40 is then deposited over the HR layer 50. More particularly, the dielectric layer 42 is deposited onto the HR layer 50 and the EL layer 44 is deposited onto the dielectric layer 42. The electrically conductive layer 46, comprised of the transparent material, is deposited onto the EL layer 44. Both of the electrically conductive layers 18, 46 are in electrical communication with the power source. The protective layer 47 is then deposited on the electrically conductive layer 46 of the EL coating 40 to complete the EL system 10.

When the power source provides electrical current to the electrically conductive layers 18, 46 of the EL system 10, the EL layer 44 of the EL coating 40 emits light in both the first direction through the dielectric layer 42, the HR layer 50, the electrically conductive layer 18, the color suppression layer 28, the barrier coating 22, and the glass substrate 12 and the second direction through the transparent electrically conductive layer 46 and the protective layer 47.

Referring now to FIG. 5, the EL system 10 is shown according to a seventh embodiment of the presently disclosed subject matter and is a non-transparent article configured to emit light from the EL system 10 in the first direction through the glass substrate 12. The EL system 10 includes the glass substrate 12 having the barrier coating 22, comprised of an insulator layer 24 of undoped silicon oxide ($SiO_2$), deposited thereon. The color suppression coating 28 is deposited onto the barrier coating 22. More particularly, the first color suppression or anti-iridescence interlayer 30a of undoped tin oxide ($SnO_2$) is deposited onto the insulator layer 24 of the barrier coating 22 and the second color suppression or anti-iridescence interlayer 30b of the color suppression coating 28 of silicon dioxide ($SiO_2$) is deposited onto the first color suppression or anti-iridescence interlayer 30a. The electrically conductive coating 14 including the electrically conductive layer 18 of fluorine doped tin oxide ($SnO_2$:F) is deposited onto the second color suppression or anti-iridescence interlayer 30b. The EL coating 40 is then deposited over the electrically conductive coating 14. More particularly, the dielectric layer 42 is deposited onto the electrically conductive layer 18 of the electrically conductive coating 14 and the EL layer 44 is deposited onto the dielectric layer 42. The electrically conductive layer 46, comprising the non-transparent material, is deposited onto the EL layer 44. Both of the electrically conductive layers 18, 46 are in electrical communication with the power source. The AR element 60, comprised of either an antireflective coating or a glass sheet having a polyvinyl butyral film interposed between the glass sheet and the glass substrate 12, is deposited on the glass substrate 12 opposite the barrier coating 22, the color suppression coating 28, the electrically conductive coating 14, and the EL coating 40 to complete the EL system 10.

When the power source provides electrical current to the electrically conductive layers 18, 46 of the EL system 10, the EL layer 44 of the EL coating 40 emits light in the first direction through the dielectric layer 42, the electrically conductive layer 18, the color suppression layer 28, the barrier coating 22, the glass substrate 12, and the AR element 60. The nontransparent electrically conductive layer 46 absorbs, scatters, or reflects the light emitted from the EL layer 44 and, therefore, militates against the light emitted from the EL layer 44 of the EL coating 40 to be transmitted in the second direction.

An eighth embodiment of the presently disclosed subject matter is a non-transparent article configured to emit light from the EL system 10 in the first direction through the glass substrate 12. The EL system 10 includes the glass substrate 12 having the barrier coating 22, comprised of an insulator layer 24 of undoped silicon oxide ($SiO_2$), deposited thereon. The color suppression coating 28 is deposited onto the barrier coating 22. More particularly, the first color suppression or anti-iridescence interlayer 30a of undoped tin oxide ($SnO_2$) is deposited onto the insulator layer 24 of the barrier coating 22 and the second color suppression or anti-iridescence interlayer 30b of the color suppression coating 28 of silicon dioxide ($SiO_2$) is deposited onto the first color suppression or anti-iridescence interlayer 30a. The electrically conductive coating 14 including the electrically conductive layer 18 of fluorine doped tin oxide ($SnO_2$:F) is deposited onto the second color suppression or anti-iridescence interlayer 30b. The HR layer 50 of titanium dioxide ($TiO_2$) or tantalum oxide (TaOx) is deposited onto the electrically conductive layer 18 of the electrically conductive coating 14. The EL coating 40 is then deposited over the HR layer 50. More particularly, the dielectric layer 42 is deposited onto the HR layer 50 and the EL layer 44 is deposited onto the dielectric layer 42. The electrically conductive layer 46, comprised of the nontransparent material, is deposited onto the EL layer 44. Both of the electrically conductive layers 18, 46 are in electrical communication with the power source. The AR element 60, comprised of either an antireflective coating or a glass sheet having a polyvinyl butyral film interposed between the glass sheet and the glass substrate 12, is deposited on the glass substrate 12 opposite the barrier coating 22, the color suppression coating 28, the electrically conductive coating 14, and the EL coating 40 to complete the EL system 10. The AR element 60, comprised of either an antireflective coating or a glass sheet having a polyvinyl butyral film interposed between the glass sheet and the glass substrate 12, is deposited on the glass substrate 12 opposite the barrier coating 22, the color suppression coating 28, the electrically conductive coating 14, the HR layer 50, and the EL coating 40 to complete the EL system 10.

When the power source provides electrical current to the electrically conductive layers 18, 46 of the EL system 10, the EL layer 44 of the EL coating 40 emits light in the first direction through the dielectric layer 42, the HR layer 50, the electrically conductive layer 18, the color suppression layer 28, the barrier coating 22, the glass substrate 12, and the AR element 60. The nontransparent electrically conductive layer 46 absorbs, scatters, or reflects the light emitted from the EL layer 44 and, therefore, militates against the light emitted from the EL layer 44 of the EL coating 40 to be transmitted in the second direction.

FIG. 6 illustrates the EL system 10 according to a ninth embodiment of the presently disclosed subject matter is a mirrored article configured to militate against light flowing in the first direction through the glass substrate 12 and emit light from the EL system 10 in the opposite second direction through the EL coating 40. The EL system 10 includes the glass substrate 12 having the reflective element 70, comprised of undoped silicon (Si), deposited thereon. Preferably, the reflective element 70 is disposed between the glass substrate 12 and the electrically conductive coating 14. The color suppression coating 28 of silicon dioxide ($SiO_2$) is deposited onto the reflective element 70. The electrically conductive coating 14 including the electrically conductive layer 18 of fluorine doped tin oxide ($SnO_2$:F) is deposited onto the color suppression coating 28. The EL coating 40 is then deposited over the electrically conductive coating 14. More particularly, the dielectric layer 42 is deposited onto the electrically conductive layer 18 of the electrically conductive coating 14 and the EL layer 44 is deposited onto the dielectric layer 42. The electrically conductive layer 46, comprised of the transparent material, is deposited onto the EL layer 44. Both of the electrically conductive layers 18, 46 are in electrical communication with the power source. The protective layer 47 is then deposited on the electrically conductive layer 46 of the EL coating 40 to complete the EL system 10.

When the power source provides electrical current to the electrically conductive layers 18, 46 of the EL system 10, the EL layer 44 of the EL coating 40 emits light in both the first direction and the second direction. As illustrated, the light emitted from the EL layer 44 in the first direction through the dielectric layer 42, the electrically conductive layer 18, and the color suppression layer 28, is reflected by the reflective element 70, which militates against a transmission of light therethrough. Hence, the light emitted from the EL layer 44 in the first direction is not transmitted through the reflective element 70 and the glass substrate 12. The light emitted from the EL layer 44 in the second direction is transmitted through the transparent electrically conductive layer 46 and the protective layer 47.

## Claims

1. An electroluminescent (EL) system, comprising:

   a glass substrate;
   an electrically conductive coating disposed adjacent the glass substrate, the electrically conductive coating including a first electrically conductive layer formed of a fluorine doped tin oxide;
   a barrier coating disposed between the glass substrate and the electrically conductive coating; and
   an electroluminescent coating disposed adjacent the electrically conductive coating,
   wherein the electroluminescent coating includes a second electrically conductive layer and an electroluminescent layer disposed between the first and second electrically conductive layers,
   and wherein the electroluminescent layer is configured to emit light when an electrical current is supplied to the first and second electrically conductive layers.

2. The EL system of claim 1, wherein the first electrically conductive layer is transparent.

3. The EL system of claim 1, wherein the barrier coating comprises at least one insulator layer formed of a non-metal oxide or metalloid oxide, and optionally wherein the barrier coating is formed of a silicon oxide.

4. The EL system of claim 1, further comprising a color suppression coating disposed between the glass substrate and the electrically conductive coating, and optionally wherein the color suppression coating comprises a first anti-iridescence interlayer and a second anti-iridescence interlayer.

**5.** The EL system of claim 4, wherein the color suppression coating comprises a first anti-iridescence interlayer and a second anti-iridescence interlayer, and wherein at least one of the first anti-iridescence interlayer and the second anti-iridescence interlayer is formed of an inorganic metal oxide, and optionally wherein at least one of the first anti-iridescence interlayer and the second anti-iridescence interlayer is formed of one of an undoped tin oxide and a silicon dioxide.

**6.** The EL system of claim 1, wherein the electroluminescent coating further includes a dielectric layer disposed between the first electrically conductive layer of the electrically conductive coating and the second electrically conductive layer of the electroluminescent coating.

**7.** The EL system of claim 1, wherein the electroluminescent coating further includes at least one protective layer disposed adjacent the second electrically conductive layer of the electroluminescent coating and/or wherein the second electrically conductive layer of the electroluminescent coating is formed of one of an opaque material, a semi-opaque material, a semi-transparent material, and a transparent material.

**8.** The EL system of claim 1, further comprising an absorption layer disposed between the glass substrate and the electrically conductive coating, and optionally wherein the absorption layer is formed of a doped metal oxide, optionally of antimony doped tin oxide.

**9.** The EL system of claim 1, further comprising a high-resistance layer disposed between the electrically conductive coating and the electroluminescent coating, and optionally wherein the high-resistance layer is formed of an inorganic metal oxide, optionally of tantalum oxide.

**10.** The EL system of claim 1, further comprising an antireflective element disposed adjacent the glass substrate, optionally wherein the antireflective element is disposed on the glass substrate opposite at least one of the electrically conductive coating and the electroluminescent coating.

**11.** The EL system of claim 10, wherein the antireflective element is one of an antireflective coating deposited on the glass substrate and a glass sheet having an antireflective film disposed adjacent the glass substrate and/or wherein the antireflective element is a coating including at least one of a layer of magnesium fluoride, a layer of silicon oxide, a layer of tin oxide, and a layer of titanium dioxide.

**12.** The EL system of claim 10, wherein the antireflective element is a coating including a first tin oxide layer, a first silicon oxide layer disposed on the first tin oxide layer, a second tin oxide layer disposed on the first silicon oxide layer, and a second silicon oxide layer disposed on the second tin oxide layer, or wherein the antireflective element is a coating including a first tin oxide layer, a titanium dioxide layer disposed on the first tin oxide layer, and a second tin oxide layer disposed on the titanium dioxide layer.

**13.** The EL system of claim 1, further comprising a reflective element disposed adjacent the glass substrate, optionally wherein the reflective element is formed of a pyrolytic reflective coating, optionally of undoped silicon.

**14.** The EL system of claim 1, wherein the electroluminescent coating is a paint.

**15.** A method of producing an electroluminescent (EL) system, comprising:

providing a glass substrate;
forming an electrically conductive coating adjacent the glass substrate, wherein the electrically conductive coating includes a first electrically conductive layer formed of a fluorine doped tin oxide;
forming a barrier coating disposed between the glass substrate and the electrically conductive coating; and
forming an electroluminescent coating adjacent the electrically conductive coating,

wherein the electroluminescent coating includes a second electrically conductive layer and an electroluminescent layer disposed between the first and second electrically conductive layers,
and wherein the electroluminescent layer is configured to emit light when an electrical current is supplied to the first and second electrically conductive layers;

optionally wherein the electroluminescent coating is formed by one of a liquid-application, an aerosol spray application, an electrostatic spray application, and a print application.

**Patentansprüche**

**1.** Elektrolumineszenz- (EL) System, aufweisend:

ein Glassubstrat;
eine elektrisch leitfähige Beschichtung, die an das Glassubstrat angrenzt, wobei die elektrisch leitfähige Beschichtung eine erste elektrisch leitfähige Schicht aufweist, die aus einem mit Fluor dotierten Zinnoxid gebildet ist; eine Barrierebeschichtung, die zwischen dem Glassubstrat und der elektrisch leitfähigen Beschichtung angeordnet ist; und eine Elektrolumineszenzbeschichtung, die an die elektrisch leitfähige Beschichtung angrenzt, wobei die Elektrolumineszenzbeschichtung eine zweite elektrisch leitfähige Schicht und eine zwischen der ersten und der zweiten elektrisch leitfähigen Schicht angeordnete elektrolumineszente Schicht aufweist, und wobei die elektrolumineszente Schicht dazu ausgebildet ist, Licht zu emittieren, wenn der ersten und der zweiten elektrisch leitfähigen Schicht elektrischer Strom zugeführt wird.

2. EL-System nach Anspruch 1, wobei die erste elektrisch leitfähige Schicht transparent ist.

3. EL-System nach Anspruch 1, wobei die Barrierebeschichtung mindestens eine aus einem nichtmetallischen Oxid oder metallischen Oxid gebildete Isolierschicht aufweist, und wobei optional die Barrierebeschichtung aus Siliziumoxid gebildet ist.

4. EL-System nach Anspruch 1, ferner aufweisend eine Farbunterdrückungsbeschichtung, die zwischen dem Glassubstrat und der elektrisch leitfähigen Beschichtung angeordnet ist, und wobei optional die Farbunterdrückungsbeschichtung eine erste Anti-Irideszenz-Zwischenschicht und eine zweite Anti-Irideszenz-Zwischenschicht aufweist.

5. EL-System nach Anspruch 4, wobei die Farbunterdrückungsbeschichtung eine erste Anti-Irideszenz-Zwischenschicht und eine zweite Anti-Irideszenz-Zwischenschicht aufweist, und wobei mindestens eine der ersten und der zweiten Anti-Irideszenz-Zwischenschicht aus einem anorganischen Metalloxid gebildet ist, und wobei optional mindestens eine der ersten und der zweiten Anti-Irideszenz-Zwischenschicht aus undotiertem Zinnoxid oder Siliziumdioxid gebildet ist.

6. EL-System nach Anspruch 1, wobei die Elektrolumineszenzbeschichtung ferner eine dielektrische Schicht aufweist, die zwischen der ersten elektrisch leitfähigen Schicht der elektrisch leitfähigen Beschichtung und der zweiten elektrisch leitfähigen Schicht der Elektrolumineszenzbeschichtung angeordnet ist.

7. EL-System nach Anspruch 1, wobei die Elektrolumineszenzbeschichtung ferner mindestens eine Schutzschicht aufweist, die an die zweite elektrisch leitfähige Schicht der Elektrolumineszenzbeschichtung angrenzt, und/oder wobei die zweite elektrisch leitfähige Schicht der Elektrolumineszenzbeschichtung aus einem undurchsichtigen Material, einem halbundurchsichtigen Material, einem halbtransparenten Material oder einem transparenten Material gebildet ist.

8. EL-System nach Anspruch 1, ferner aufweisend eine Absorptionsschicht, die zwischen dem Glassubstrat und der elektrisch leitfähigen Beschichtung angeordnet ist, und wobei die Absorptionsschicht optional aus einem dotierten Metalloxid gebildet ist, optional aus einem mit Antimon dotierten Zinnoxid.

9. EL-System nach Anspruch 1, ferner aufweisend eine hochohmige Schicht, die zwischen der elektrisch leitfähigen Beschichtung und der Elektrolumineszenzbeschichtung angeordnet ist, und wobei die hochohmige Schicht optional aus einem anorganischen Metalloxid gebildet ist, optional aus Tantaloxid.

10. EL-System nach Anspruch 1, ferner aufweisend ein Antireflexions-Element, das an dem Glassubstrat angrenzt, und wobei das Antireflexions-Element optional auf dem Glassubstrat gegenüber wenigstens einer der elektrisch leitfähigen Beschichtung und der Elektrolumineszenzbeschichtung angeordnet ist.

11. EL-System nach Anspruch 10, wobei das Antireflexions-Element eine von einer auf dem Glassubstrat angeordneten Antireflexionsbeschichtung und einer Glasscheibe mit einem angrenzend an das Glassubstrat angeordneten Antireflexionsfilm ist und/oder wobei das Antireflexions-Element eine Beschichtung aufweist, die mindestens eine Schicht aus Magnesiumfluorid, Siliziumoxid, Zinnoxid oder Titandioxid aufweist.

12. EL-System nach Anspruch 10, wobei das Antireflexions-Element eine Beschichtung ist, die eine erste Zinnoxidschicht, eine auf der ersten Zinnoxidschicht angeordnete erste Siliziumoxidschicht, eine auf der ersten Siliziumoxidschicht angeordnete zweite Zinnoxidschicht und eine auf der zweiten Zinnoxidschicht angeordnete zweite Siliziumoxidschicht aufweist, oder wobei das Antireflexions-Element eine Beschichtung ist, die eine erste Zinnoxidschicht, eine auf der ersten Zinnoxidschicht angeordnete Titandioxidschicht und eine auf der Titandioxidschicht angeordnete zweite Zinnoxidschicht aufweist.

13. EL-System nach Anspruch 1, ferner aufweisend ein Reflexionselement, das an das Glassubstrat angrenzt, und wobei optional das Reflexionselement aus einer pyrolytischen Reflexionsbeschichtung gebildet ist, optional aus undotiertem Silizium.

**14.** EL-System nach Anspruch 1, wobei die Elektrolumineszenzbeschichtung ein Lack ist.

**15.** Verfahren zur Herstellung eines Elektrolumineszenz- (EL) Systems, aufweisend:

Bereitstellen eines Glassubstrats;
Bilden einer elektrisch leitfähigen Beschichtung angrenzend an das Glassubstrat, wobei die elektrisch leitfähige Beschichtung eine erste elektrisch leitfähige Schicht aufweist, die aus einem mit Fluor dotierten Zinnoxid gebildet ist;
Bilden einer Barrierebeschichtung zwischen dem Glassubstrat und der elektrisch leitfähigen Beschichtung; und
Bilden einer Elektrolumineszenzbeschichtung angrenzend an die elektrisch leitfähige Beschichtung, wobei die Elektrolumineszenzbeschichtung eine zweite elektrisch leitfähige Schicht und eine zwischen der ersten und der zweiten elektrisch leitfähigen Schicht angeordnete elektrolumineszente Schicht aufweist, und wobei die elektrolumineszente Schicht so ausgebildet ist, dass sie Licht emittiert, wenn den ersten und den zweiten elektrisch leitfähigen Schichten elektrischer Strom zugeführt wird;
wobei optional die Elektrolumineszenzbeschichtung durch Flüssigkeitsauftrag, Aerosol-Sprühauftrag, elektrostatischen Sprühauftrag, und Druckauftrag. gebildet wird.

**Revendications**

**1.** Système électroluminescent (EL), comprenant :

un substrat en verre ;
un revêtement électroconducteur adjacent au substrat en verre, le revêtement électroconducteur incluant une première couche électroconductrice constituée d'un oxyde d'étain dopé au fluor ;
un revêtement barrière disposé entre le substrat en verre et le revêtement électroconducteur ; et
un revêtement électroluminescent adjacent au revêtement électroconducteur, dans lequel le revêtement électroluminescent inclut une deuxième couche électroconductrice et une couche électroluminescente disposée entre les première et deuxième couches électroconductrices, et dans lequel la couche électroluminescente est configurée pour émettre de la lumière quand un courant électrique est alimenté aux première et deuxième couches électroconductrices.

**2.** Système EL selon la revendication 1, dans lequel la première couche électroconductrice est transparente.

**3.** Système EL selon la revendication 1, dans lequel le revêtement barrière comprend au moins une couche isolante constituée d'un oxyde non métallique ou d'un oxyde métalloïde, et éventuellement dans lequel le revêtement barrière est constitué d'un oxyde de silicium.

**4.** Système EL selon la revendication 1, comprenant en outre un revêtement de suppression de couleur disposé entre le substrat en verre et le revêtement électroconducteur, et éventuellement dans lequel le revêtement de suppression de couleur comprend une première couche intermédiaire anti-iridescence et une deuxième couche intermédiaire anti-iridescence.

**5.** Système EL selon la revendication 4, dans lequel le revêtement de suppression de couleur comprend une première couche intermédiaire anti-iridescence et une deuxième couche intermédiaire anti-iridescence, et dans lequel au moins une couche parmi la première couche intermédiaire anti-iridescence et la deuxième couche intermédiaire anti-iridescence est constituée d'un oxyde métallique inorganique, et éventuellement dans lequel au moins une couche parmi la première couche intermédiaire anti-iridescence et la deuxième couche intermédiaire anti-iridescence est constituée d'un oxyde d'étain non dopé et d'un dioxyde de silicium.

**6.** Système EL selon la revendication 1, dans lequel le revêtement électroluminescent inclut en outre une couche diélectrique disposée entre la première couche électroconductrice du revêtement électroconducteur et la deuxième couche électroconductrice du revêtement électroluminescent.

**7.** Système EL selon la revendication 1, dans lequel le revêtement électroluminescent inclut en outre au moins une couche protectrice adjacente à la deuxième couche électroconductrice du revêtement électroluminescent, et/ou dans lequel la deuxième couche électroconductrice du revêtement électroluminescent est constituée d'un matériau parmi un matériau opaque, un matériau semi-opaque, un matériau semi-transparent et un matériau transparent.

**8.** Système EL selon la revendication 1, comprenant en outre une couche d'absorption disposée entre le substrat en verre et le revêtement électroconducteur, et éventuellement dans lequel la couche d'absorption est constituée d'un oxyde métallique dopé, éventuellement d'oxyde d'étain dopé à l'antimoine.

**9.** Système EL selon la revendication 1, comprenant en outre une couche à haute résistance disposée entre le revêtement électroconducteur et le revêtement électroluminescent, et éventuellement dans lequel la couche à haute résistance est constituée d'un oxyde métallique inorganique, éventuellement d'oxyde de tantale.

10. Système EL selon la revendication 1, comprenant en outre un élément antireflet adjacent au substrat en verre, dans lequel éventuellement l'élément antireflet est disposé sur le substrat en verre opposé à au moins un revêtement parmi le revêtement électroconducteur et le revêtement électroluminescent.

11. Système EL selon la revendication 10, dans lequel l'élément antireflet est un élément parmi un revêtement antireflet déposé sur le substrat en verre et une feuille de verre ayant un film antireflet adjacent au substrat en verre, et/ou dans lequel l'élément antireflet est un revêtement incluant au moins une couche parmi une couche de fluorure de magnésium, une couche d'oxyde de silicium, une couche d'oxyde d'étain et une couche de dioxyde de titane.

12. Système EL selon la revendication 10, dans lequel l'élément antireflet est un revêtement incluant une première couche d'oxyde d'étain, une première couche d'oxyde de silicium disposée sur la première couche d'oxyde d'étain, une deuxième couche d'oxyde d'étain disposée sur la première couche d'oxyde de silicium, et une deuxième couche d'oxyde de silicium disposée sur la deuxième couche d'oxyde d'étain, ou dans lequel l'élément antireflet est un revêtement incluant une première couche d'oxyde d'étain, une couche de dioxyde de titane disposée sur la première couche d'oxyde d'étain, et une deuxième couche d'oxyde d'étain disposée sur la couche de dioxyde de titane.

13. Système EL selon la revendication 1, comprenant en outre un élément réfléchissant adjacent au substrat en verre, dans lequel éventuellement l'élément réfléchissant est constitué d'un revêtement réfléchissant pyrolytique, et éventuellement de silicium non dopé.

14. Système EL selon la revendication 1, dans lequel le revêtement électroluminescent est une peinture.

15. Procédé de production d'un système électroluminescent (EL), comprenant :

la fourniture d'un substrat en verre ;
la formation d'un revêtement électroconducteur adjacent au substrat en verre, dans lequel le revêtement électroconducteur inclut une première couche électroconductrice constituée d'un oxyde d'étain dopé au fluor ;
la formation d'un revêtement barrière disposé entre le substrat en verre et le revêtement électroconducteur ; et
la formation d'un revêtement électroluminescent adjacent au revêtement électroconducteur, dans lequel le revêtement électroluminescent inclut une deuxième couche électroconductrice et une couche électroluminescente disposée entre les première et deuxième couches électroconductrices, et dans lequel la couche électroluminescente est configurée pour émettre de la lumière quand un courant électrique est alimenté aux première et deuxième couches électroconductrices ;
éventuellement dans lequel le revêtement électroluminescent est formé par un procédé parmi une application liquide, une application par pulvérisation d'aérosol, une application par pulvérisation électrostatique, et une application par impression.

**FIG. 1**

**FIG. 2**

FIG. 3

**FIG. 4**

**FIG. 5**

**FIG. 6**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005062411 A1
- US 4308316 A
- US 4612217 A
- US 4419386 A
- US 9642212 B